# EUROPEAN PATENT APPLICATION

(11) **EP 1 431 156 A1**
(43) Date of publication of application: **23.06.2004**
(21) Application number: 04006993.2
(22) Date of filing: 22.05.2000
(51) Int. Cl.: B61F 5/02, F16F 7/01

(54) **A railway vehicle**

(30) Priority: 20.05.1999 JP 13967299; 24.09.1999 JP 26985399; 01.02.2000 JP 2000028888
(62) Divisional of application: 00304303.1
(71) Applicant: Hitachi, Ltd., Chiyoda-ku, Tokyo 101-8010 (JP)
(72) Inventor: Sebata, Michio, Kudamatsu-shi Yamaguchi 744-0061 (JP); Makino, Toshiaki, Kudamatsu-shi Yamaguchi 744-0062 (JP); Hiraishi, Motomi, Kudamatsu-shi Yamaguchi 744-0011 (JP); Nakamura, Minoru, Kudamatsu-shi Yamaguchi 744-0042 (JP)
(74) Representative: Paget, Hugh Charles Edward

(57) **Abstract**

In a railway bogie vehicle, vibration caused by the unbalance of the drive system can be restrained and the noise in the railway car due to the vibration can be reduced, by providing a vibration absorber comprising a container 42 containing movable particles 41, mounted on or in a connection member 20 such as a traction link, a damper or a bolster anchor. Collisions of the particles absorb vibration.

## Description

### Field of the Invention

The present invention relates to a railway vehicle and in particularly to a railway bogie vehicle. The invention also relates to a bogie and a connection member for such a vehicle.

### Background of the Invention

As stated in Japanese application utility model publication No. Sho 58-1406, the bogie frame and the car body of a bogie vehicle are connected by a traction link (hereinafter, referred to as a "link"). At both ends of the link, namely in the forward and backward directions, a rubber bush is arranged. The rubber bush is designed to resist compression load which occurs sometimes in the forward and backward directions. The rubber bush is also for running stability. Further, the bogie and the car body are connected by a yaw damper.

A sound shielding panel using shaped particles is described in Japanese patent application laid-open No. Hei 10-266388. In this panel, in a floor of a car body using an aluminum honeycomb panel, in an interior portion of the panel, powders having a particle size of 30 to 1000 µm are received. Damping in the up and down direction of the floor of the car body is achieved.

Vibration in the forwards and backwards directions (the running direction of the vehicle) which is generated in the bogie is transmitted to the two rubber bushes and the link, and through a connection portion of the yaw damper. For this reason, noise in the car may become high. In particular, a solid propagation vibration having a rotation frequency component in the 80 to 300 Hz band is transmitted from the bogie and this vibration may vibrate the floor. Accordingly there is a problem of increase of noise in the car.

In the vibration generated by a rotational unbalance in a drive system, a component having a size of less than 10 m/s² from one time to three times the rotation vibration component f1 of an electric motor shaft is comparatively noticeable. These rotation vibration components f1-3f1 are transmitted as a solid propagation vibration to the car body through the link, to become up and down vibration of the floor of the car body, and appear as noise in the car.

During acceleration of the car in running, the two times (2f1) component generates in the forward and backwards direction, in the right and left direction, and in the up and down direction. In particular the vibration in the forward and backward direction tends to increase noise in the car. Further, during deceleration and coasting, the increase in the forward and backward vibration of the one times (f1) component to the three times (3f1) component occurs remarkably. For example, when f1 is 80 Hz, 2f1 is 160 HZ, and 3f1 is 240 Hz. For this reason, it is required to reduce the vibration at about more than 100 Hz.

### Summary of the Invention

An object of the present invention is to reduce noise in a bogie car by a simple construction.

The above stated object can be attained by a connection member between one car body and another car body, or a connection body between the car body and a bogie car frame, having a vessel which receives a substance enable to move relative to the connection member. The connection members are a traction link, a yaw damper, a right and left move damper, between car bodies before and back damper, a bolster anchor etc.

According to the present invention, vibration energy generated in the connection member is changed to kinetic energy of the above stated body by collisions of the above stated substance and vibration at the connection member is reduced. For this reason, a propagation of the vibration to the car body can be restrained and noise in the car can be reduced.

Noise in the car is generated by the vibration of the floor face of the car body. A vibration source is a rotation unbalance of a drive system of the car body. The above stated connection member is arranged between the vibration source and floor face of the car body and mainly vibrates in the forward and backward direction. For this reason, the above stated substance in an interior portion of the connection member moves in the forward and backward direction. For this reason, in the movement of the substance since it is unnecessary to have the vibration of 10 m/s² which goes against gravity, the substance moves actively in response to a small excitation force. Accordingly, vibration of the floor face of the car body can be restrained, and noise in the car can be reduced.

Since the connection member can be of comparatively light weight, the vibration can be restrained by a simple apparatus.

### Brief Description of Drawings

Fig. 1 is a side view showing a traction link of one embodiment according to the present invention;
Fig. 2 is an enlarged view of a portion of Fig. 1;
Fig. 3 is a plan view on the link of Fig. 2;
Fig. 4 is a sectional view on line IV-IV of Fig. 2;
Fig. 5 is a plan view showing a bogie to which one embodiment according to the present invention is installed;
Fig. 6 is an explanatory view showing a vibration characteristic of the bogie car;
Fig. 7 is a graph showing the effect of one embodiment according to the present invention;
Fig. 8 is a graph showing the effect of a second embodiment according to the present invention;
Fig. 9 is a graph showing the effect of a third embodiment according to the present invention;
Fig. 10 is a graph showing the effect of a fourth embodiment according to the present invention;
Fig. 11 is a graph showing the effect of a fifth embodiment according to the present invention;
Fig. 12 is a longitudinal cross-sectional view showing a damping apparatus of another embodiment according to the present invention;
Fig. 13 is a longitudinal cross-sectional view showing a damping apparatus of a further embodiment according to the present invention;
Fig. 14 is a side view of a traction link of another embodiment according to the present invention;
Fig. 15 is a plan view of Fig. 12 ;
Fig. 16 is a sectional view on line XVI-XVI of Fig. 12;
Fig. 17 is a sectional view on line XVII-XVII of Fig. 12;
Fig. 18 is a graph in which a relationship between a damping effect and a mass are summarized;
Fig. 19 is a longitudinal cross-sectional view showing a damping apparatus of a further embodiment according to the present invention;
Fig. 20 is a longitudinal cross-sectional view of Fig. 19;
Fig. 21 is a longitudinal cross-sectional view showing a traction link of another embodiment according to the present invention;
Fig. 22 is a central longitudinal cross-sectional view of Fig. 21;
Fig. 23 is a longitudinal cross-sectional view showing a traction link of another embodiment according to the present invention;
Fig. 24 is a longitudinal cross-sectional view showing a traction link of another embodiment according to the present invention;
Fig. 25 is a side view showing a traction link of another embodiment according to the present invention;
Fig. 26 is a side view showing a traction link of another embodiment according to the present invention;
Fig. 27 is a side view showing a traction link of another embodiment according to the present invention;
Fig. 28 is a side view showing a traction link of another embodiment according to the present invention;
Fig. 29 is a central longitudinal cross-sectional view of Fig. 28;
Fig. 30 is a side view showing a traction link of a further embodiment according to the present invention;
Fig. 31 is a central longitudinal cross-sectional view showing a traction link of a further embodiment according to the present invention; and
Fig. 32 is a plan view showing a yaw damper portion of a further embodiment according to the present invention.

### Description of the Embodiments

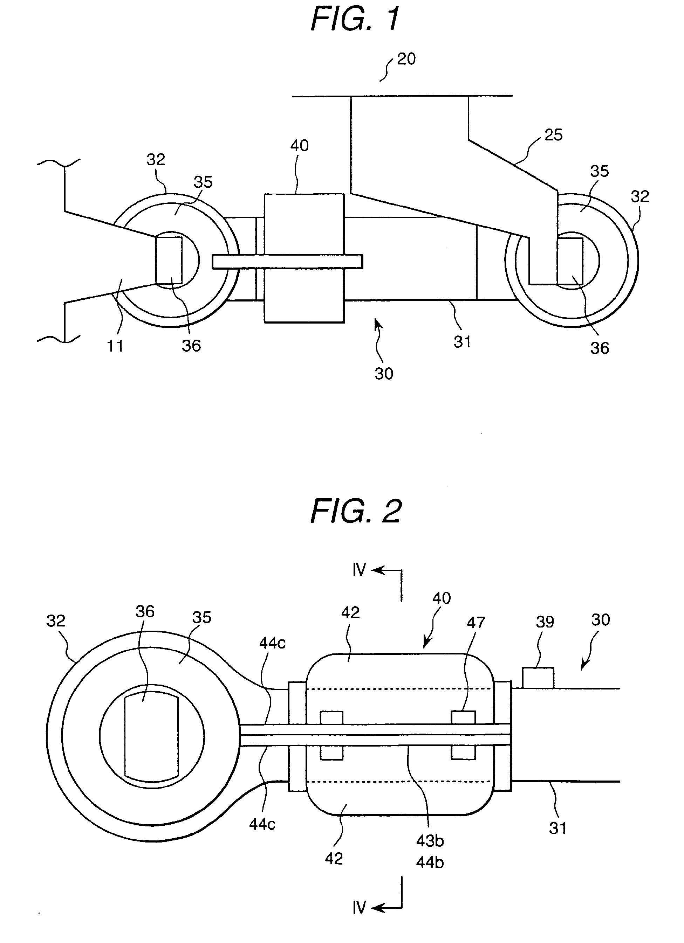

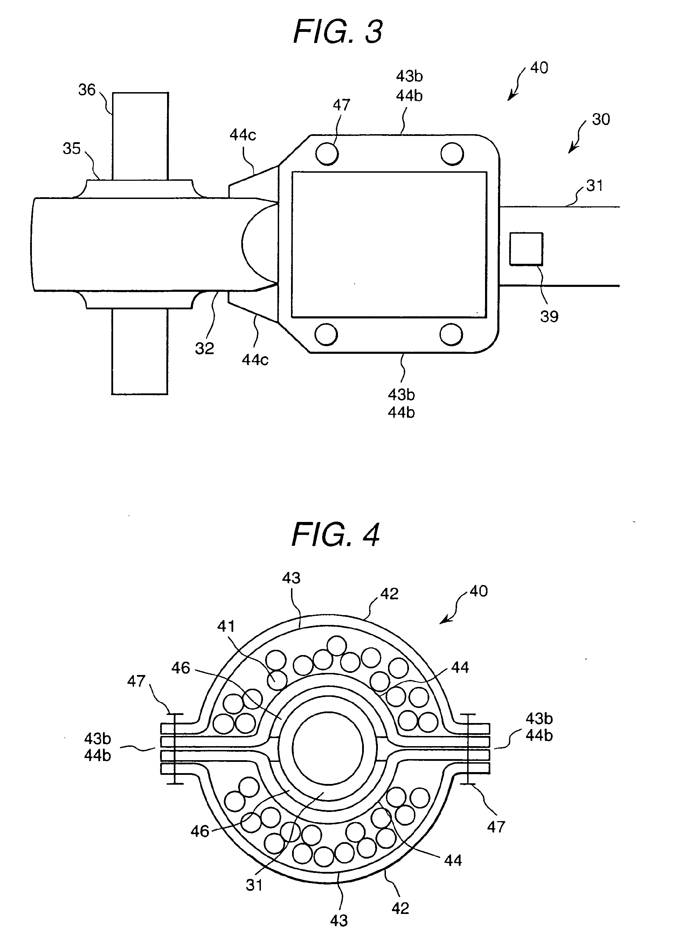

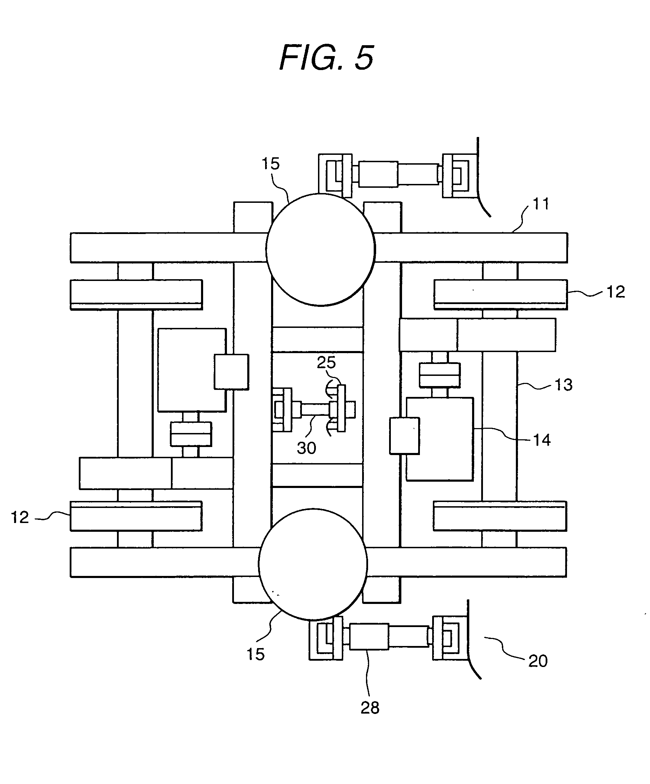

One embodiment of a railway bogie car according to the present invention will be explained referring to Figs. 1 to 5. A bogie frame 11 (Fig. 5) of the bogie car is supported by two car axles 13 having running wheels 12 and carries a drive which comprises an electric motor 14 for driving the axles 13 and reduction gears. The bogie frame 11 supports the car body 20 through air spring members 15.

A connection member 25 (in general, it is called "a centre pin") projects down from a lower face of the car body. This member 25 connects the body and the bogie frame 11 by a traction link 30 (herein, called "link"). The link 30 transmits forwards and backwards force and is arranged horizontally in the running direction.

End portions at right and left sides of the bogie frame 11 are connected to the car body 20 through yaw dampers 28. The end portions of each yaw damper 28 are connected to the bogie frame 11 and the car body 20 through rubber bushes similarly to the link 30. The yaw damper 28 prevents meandering movement during running. Further, a right and left movement damper (not shown in figure) for preventing the right and left direction vibration of the car body 20 is installed between the car body 20 and the bogie 11.

Both end portions of the link 30 are connected to the bogie 11 and the connection member 25 through a rubber bush 35 and a pin 36, etc. The connection member 25 is arranged inclined to provide a connection between the car body 20 and the link 30. The cross-section of a lower end portion of the connection member 25 is an inverted U shape. The inclined portion extends in the travel direction of the car body 20. The link 30 is arranged horizontally in the travel direction of the car body and penetrates the U shape portion. A centre portion of the link 30 is a cylindrical portion 31.

Since the vibration of a drive system of the electric motor 14, the reduction gearing thereof and a shaft coupling is transmitted to the car body 20 through the link 30, hereinafter, an example in which the vibration countermeasure is performed at the link 30 will be explained.

At an outer periphery of the cylindrical portion 31 of the link 30 adjacent the connection to the bogie car frame 11 a damping apparatus is installed. At the connection to the connection member 25, such a damping apparatus is not installed.

The damping apparatus has a vessel 40 which receives particles 41. The vessel 40 is divided into two vessels 42 at an upper portion and a lower portion. The divided vessels 42 at the upper portion and the lower portion comprise outer side plates 43 having a semi-circular shape cross-section and inner side plates 44 having a semi-circular shape cross-section. The inner side plate 44 surrounds the cylindrical portion 31. After the particles 41 are inserted, the four sides of the pairs of plates 43 and 44 are spot-welded at horizontal flanges 43b and 44b, to make a unitary vessel 40. At the joint of the plates 43 and 44 a sealing agent is coated to protect against water. The plates 43 and 44 are manufactured by press processing etc.

In place of the spot welding the whole periphery is welded, and the sealing agent can be omitted. An insertion hole may be provided to enable the particle shape member 41 to be inserted from outside.

To an arc shape inner face of the inner side plate 44, a rubber sheet 46 is adhered. The flanges 43b and 44b which extend in the axial direction of the link 30 are connected by a bolt 47 and fixed to an outer face of the link 30. The outer face of the link 30 is a circular shape. The semi-circle shape of an inner side of the inner side plate 44 is determined in response to the diameter of the link 30.

To the outer side plate (the vessel) 43 in a condition in which the particles 41 having a predetermined weight have been inserted, the inner side plate 44 is overlapped and covered and the flanges 43b and 44b are connected by the spot welding.

End portions 44c at the bogie frame 11 side of the inner side plate 44 are projected to oppose a flat portion of the coupling 32 of the end portion of the link 30. An end portion of the link 30 has a large diameter to receive the rubber bush 35. An end face of the coupling 32 in an insertion direction (an axial direction) of the rubber bush 35 and the pin 36 has a flat face. The projections 44c are overlapped to the flat face. For this reason, even if a fixing force of the bolt 47 is small, the damping apparatus 40 is not rotated.

Further, to prevent movement in the axial direction of the link 30, to the outer face of the cylindrical portion 31 a fixing chip 39 is welded. A base portion of the projections 44c is positioned at a vicinity of the coupling 32 and lateral movement of the coupling 32 is prevented.

Each particle 41 is a spherical body of an iron-based or a lead-based material. Particle size is in the range 0.1 to 10 mm. When the fill density of the particles 41 is small, the attenuation effect is small. When the fill density is large, the movement of the particles 41 becomes bad and then the vibration damping effect can be lessened. A fill density of 70-95% is preferable.

The fill density will be explained. For example, when particles 41 having a particle diameter of 1 mm are used, these particles are filled fully in the vessel and their weight is measured. This condition is the fill density of 100%. The fill density of 70% is relative to this 100% fill density for the same particles, by weight.

Further, to carry out a rust prevention and a corrosion prevention or an abrasion prevention, an absorption material (for example, a red ocher) can be enclosed.

In proportion as the weight ratio of the particles 41 becomes large, and the damping effect becomes large, it is preferable to use particles 41 having a large specific gravity. For example, it is preferable to use the lead-based material, which is comparatively cheap. When the specific gravity is large, the size of the vessel for receiving the particles 41 can be small. Further, since a small diameter of the particles 41 invites high cost, in general a diameter of 1 mm or more is preferable. When the diameter of the particles 41 is small, the fill density becomes large, and it is possible to make the vessel small.

With this construction, when the link 30 vibrates according to the vibration of the drive system, the particles 41 vibrate, and by the collision of the particles 41 with each other and with the plates 43 and 44 (since the plates are made as one body with the link 30) a frictional or damping resistance arises in the particles 41. For this reason, the vibration in the damping apparatus 40 is reduced, and vibration in the link 30 is absorbed. Further, in proportional to the increase in a specific gravity, the vibration energy of the link 30 is converted by the collisions to kinetic energy of the particles 41 with good efficiency.

Accordingly, the vibration energy becomes small and the vibration of the link 30 can be reduced. In particular, according to the vibration of the drive system, since movement in the forwards and backwards direction of the particles 41 in the interior of the damping apparatus 40 is unnecessary to resist (it is unnecessary to have the vibration of more than 10 m/s²), with the small excitation force it can active. For this reason, the vibration in the forwards and backwards direction which is solid-propagated to the car body side from the link 30 can be reduced. Accordingly, vibration in the up and down direction at the floor face of the car body is reduced, and the noise in the car which propagates from the floor face can be reduced.

Namely, to absorb the 2f1 vibration component which is comparatively strong during acceleration, by the forwards and backwards vibration which solid propagates through the link 30, the particles 41 repeatedly undergo collision at short range. For this reason, the vibration energy generated in the link 30 is converted to the kinetic energy. By the frictional resistance of the particles the vibration is reduced. Accordingly, the vibration at the link 30 can be reduced.

In comparison with the known case where the powder shape member is installed to the floor face of the car body 20, the reduction of the vibration in the forwards and backwards direction of the link 30, which occurs before the vibration is diffused to the floor face of the car body 20, has large effect. Against the vibration in the forwards and backwards direction, even considering the small excitation force, the particles 41 move actively (it is unnecessary to have the vibration of more than 10 m/s² which resists gravity). Accordingly, since the forwards and backwards vibration at the link 30 is restrained, the increase in the up and down vibration on the floor face of the car body 20 can be restrained, and the noise in the car can be reduced. Further, since the link 30 has a comparatively low weight, the vibration can be reduced by light weight apparatus.

Further, during acceleration and deceleration and coasting in running, since the vibration in the forwards and backwards direction at the link 30 increases further, the damping effect can be remarkably reduced further. The movement of the particles 41 in this case, against the large excitation force, is actively larger, so that the damping effect can be increased.

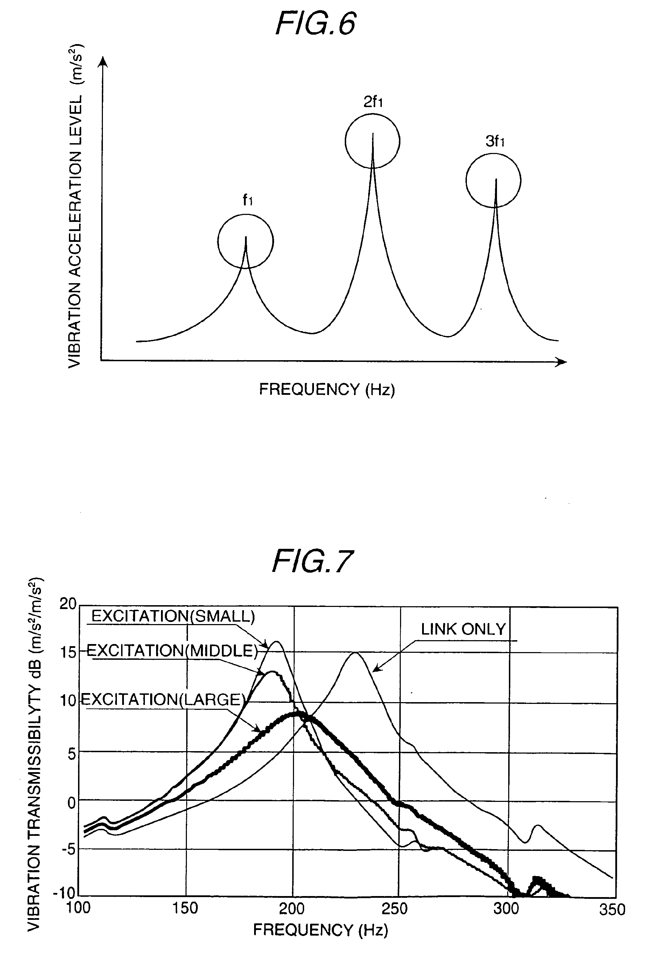

The damping effect of the particles 41 in a test will be shown by Figs. 7 to 11. In this test the pins 36 at the two ends of the link 30 were fixed to a tool, in which the pin 36 at one end was excited by a dynamo-electric type vibration exciter and a vibration transmission in the cylindrical portion 31 of the link 30 was measured. The link 30 is one which is used in an actual product and at both ends of the link 30 has the pins 36 through the rubber bushes 35. The pin 36 at one end was connected to the dynamo-electric type vibration exciter. A vibration measurement means was connected to an output portion of the dynamo-electric type vibration exciter and the cylindrical portion 31 of the link 30. The vibration transmission is a ratio of the vibration acceleration of the link 30 against the vibration acceleration at the vibration exciter.

In Figs. 7 to 11, an "excitation (small)" is a case in which the excitation vibration is 0.1 m/s², an "excitation (middle)" is a case in which the excitation vibration is 0.25 m/s² and an "excitation (large)" is a case in which the excitation vibration is 0. 5 m/s². The "excitation (small)", the "excitation (middle)", and the "excitation (large)" were with the damping apparatus according to the present invention installed. A "link (only)" is a case of the link 30 according to the prior art and the excitation vibration was 0.5 m/s². In the case of the link 30 according to the prior art, the excitation vibration is changed to the above stated "excitation (middle)", and the above stated "excitation (large)", the vibration transmission characteristic is similar to that of 0.5 m/s².

The particles 41 of the damping apparatus 40 were of a lead-based material and the particle size is 1 mm. Their weight ratio relative to the link 30 (the rubber bush and the pin are included) is 28%, and the fill density is about 95%.

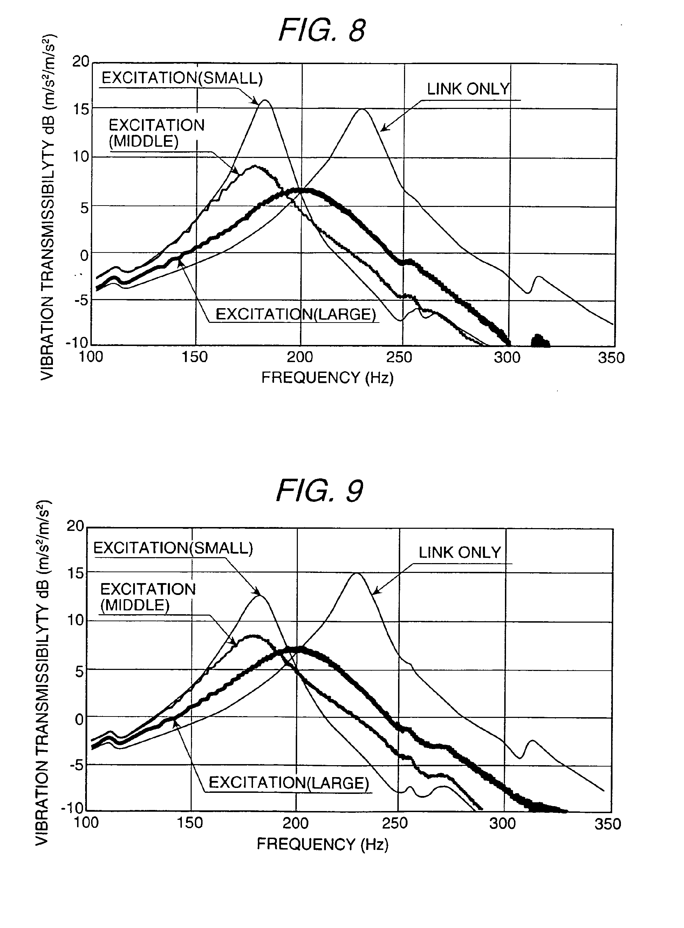

In Fig. 7 and Fig. 8, the damping apparatus 40 is provided to the outer peripheral portion of the link 30 but the rubber sheet 46 is not provided.

In Fig. 7, when the excitation vibration is small, a peak frequency of the link 30 is lowered about 40 Hz by the weight increase of the particle shape member 41, etc. When the excitation vibration is increased the peak frequency approaches to an original frequency, but the vibration transmission ratio is reduced. The damping effect at above 200 Hz band can be about -6 dB, when the excitation vibration width is large.

Fig. 8 shows a case where in addition to the damping apparatus which is installed to the outside portion shown in Fig. 7 particles 41 are enclosed in the cylindrical portion 31 of the link 30. The coupling 32 for fixing the rubber bushes 35 at both ends of the cylindrical portion 31 is welded to the link 30. The cylindrical portion 31, namely the link 30, forms the vessel. The particles 41 are similar to those of the case shown in Fig. 7. The fill density is similar to that of the case shown in Fig. 7. The weight ratio of the inner and the outer particles 41 relative to the link 30 is 44%. With this construction, as the weight ratio of the particles 41 increases, the more the damping effect increases.

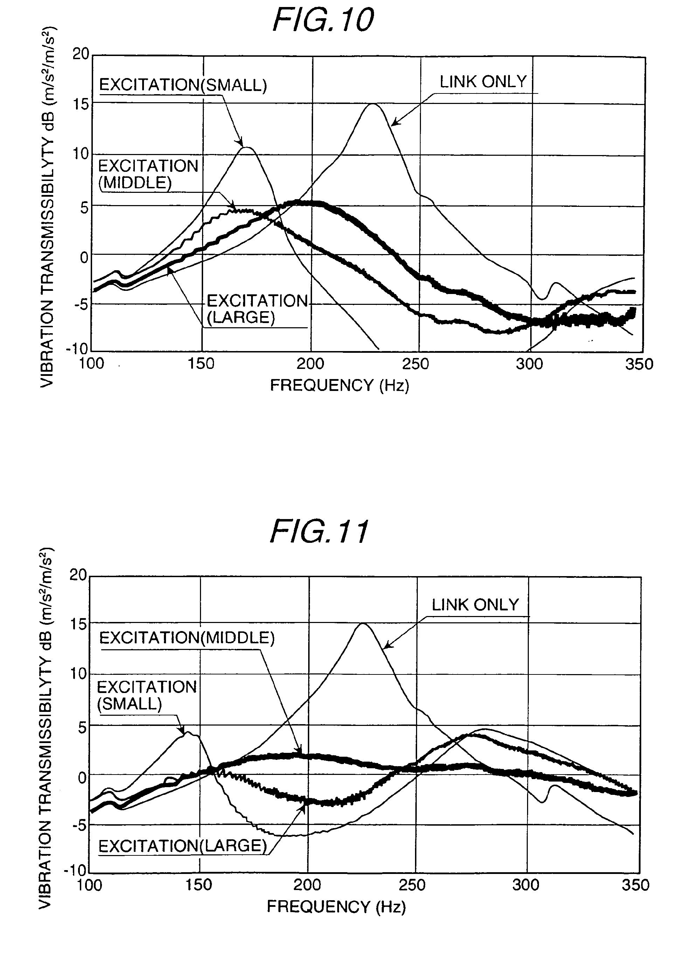

Next, referring to Fig. 9 and Fig. 10, the effect of the rubber sheet 46 will be explained. Since the vessels 42 of the damping apparatus 40 are fixed to the link 30 through the rubber sheet 46, the vessels 42 act as dynamic absorbers and the damping effect of the link 30 is increased.

Fig. 9 shows a case in which a thickness of the rubber sheet 46 is 3 mm, and Fig. 10 shows a case in which a thickness of the rubber sheet 46 is 1 mm. In both cases, the damping apparatus construction is similar to that shown in Fig. 7. With this construction, in the case of the thickness of the rubber sheet 45 of 3 mm the damping effect of about -7 dB can be obtained, and in the case of the thickness of the rubber sheet 45 of 1 mm the damping effect of about -9 dB can be obtained.

Referring to Fig. 11, the effect of the fastening force of the rubber sheet 46 will be explained. In this case, in comparison with that shown in Fig. 10, the fastening force of the bolt 47 is unfastened. However, the damping apparatus does not move easily in the rotation direction and the axial direction. The thickness of the rubber sheet 46 is 1 mm. With this construction, in a range in which the frequency is about 175 Hz to about 270 Hz, the vibration transmission ratio is reduced. The reason is that, with the intervening rubber sheet 46, frictional resistance generates on the face of the rubber sheet 46, and the damping effect according to the friction increases.

It is preferable to form plural layers of rubber sheet 46. For example, when the rubber sheet 46 is made of three layers, in the case of Fig, 9, the damping effect of -2 dB can be obtained.

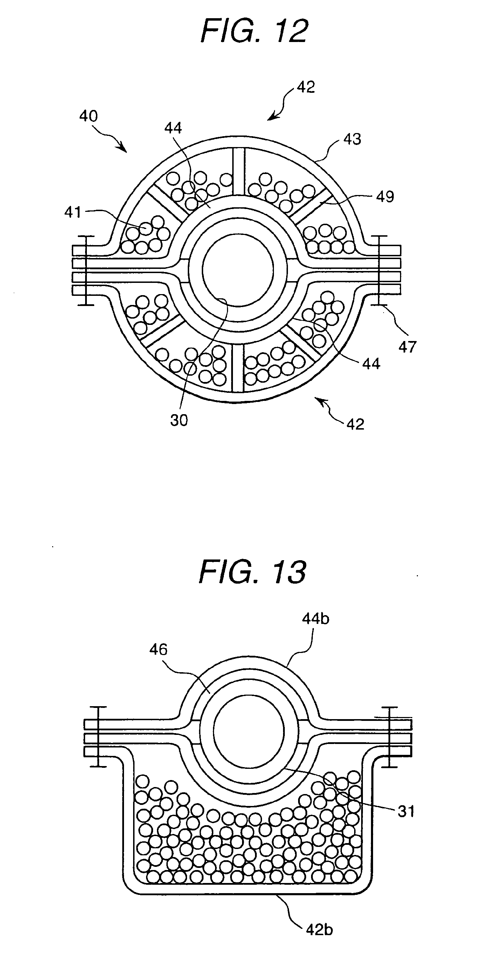

An embodiment shown in Fig. 12 will be explained. In the embodiment, the space occupied by the particles 41 is partitioned by a partition plate 49. The partition plate 49 is fixed to the inner side plate 44. With this construction, by the provision of the partition plate 49 the collision area with the particles 41 increases and a further damping effect can be obtained.

An embodiment shown in Fig. 13 will be explained. A vessel 42b is installed only at a lower face of the link 30. The cylindrical portion 31 is sandwiched by a plate which corresponds to the inner side plate 44 of the upper vessel 42 and the lower vessel 42b.

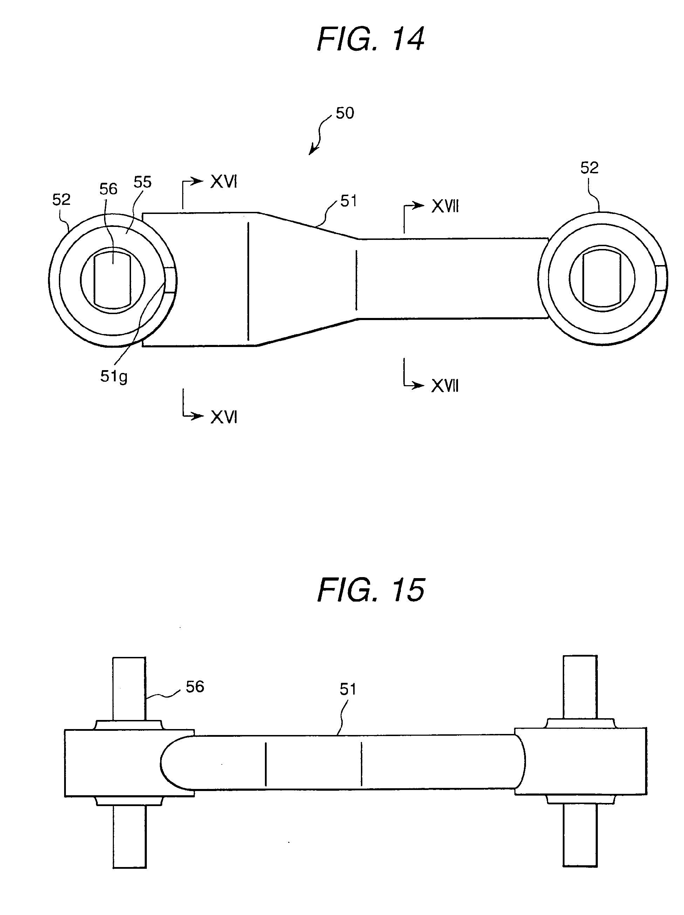

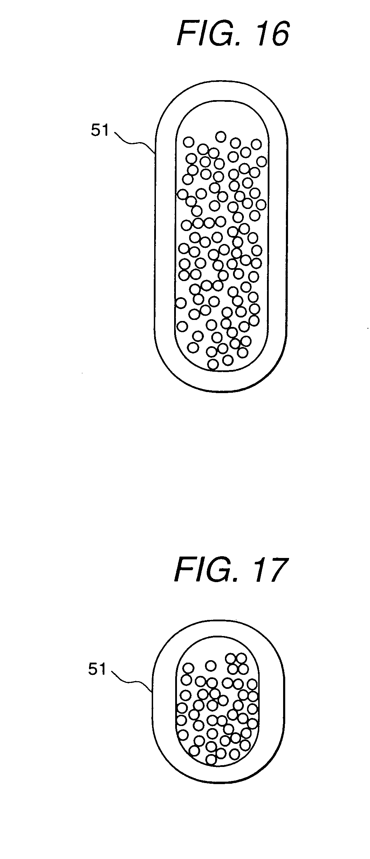

Embodiments shown from Fig. 14 to Fig. 17 will be explained. The height dimension of the portion 51 of the link 50 is large at end near the bogie frame 11 in comparison with that near the connection member 25. Near the connection member 25 the height dimension is made small so as not to contact the connection member 25. A cross-section of the cylindrical portion 51 is an ellipse-like shape.

The cylindrical portion 51 is welded of a material which is shaped with a half material of the plate using a press machine. Further, the portions at which a cross-section is changed in the longitudinal direction may be welded together. At both ends, ring shape couplings 52 for insertion under the pressure of the rubber bushes 55 are welded. After the coupling 52 at one end has been welded, the particles 41 is inserted in the cylindrical portion 51 and next the coupling 52 at other end is welded.

Alternatively the two end couplings are welded to the cylindrical portion 51, and after annealing for removing the welding strain the particles 41 can be inserted. For this reason, in the coupling at the one end a hole 51g which opens into the cylindrical portion 51 is provided. After the welding via this hole 51g the particles 41 is inserted. After that the rubber bush 55 is inserted under the pressure to the coupling 52 and mounted. In this manner, the hole 51g is closed.

With this construction, the annealing processing for removing the welding strain can be carried out. Further, since the hole 51g for inserting the particle shape member 41 is closed by the rubber bush 55, it is unnecessary to prepare a special member for closing the hole 51g.

The height of the cylindrical portion 51 is shown changed in three steps, but it may change linearly. With this construction, the welding work can be lessened.

With this construction, the interior volume of the link 50 can be increased and the damping effect due to the particles 41 can be increased. Further, in comparison with the installation at the outside, a risk of damage to the damping apparatus and the scattering of the particles 41 can be reduced.

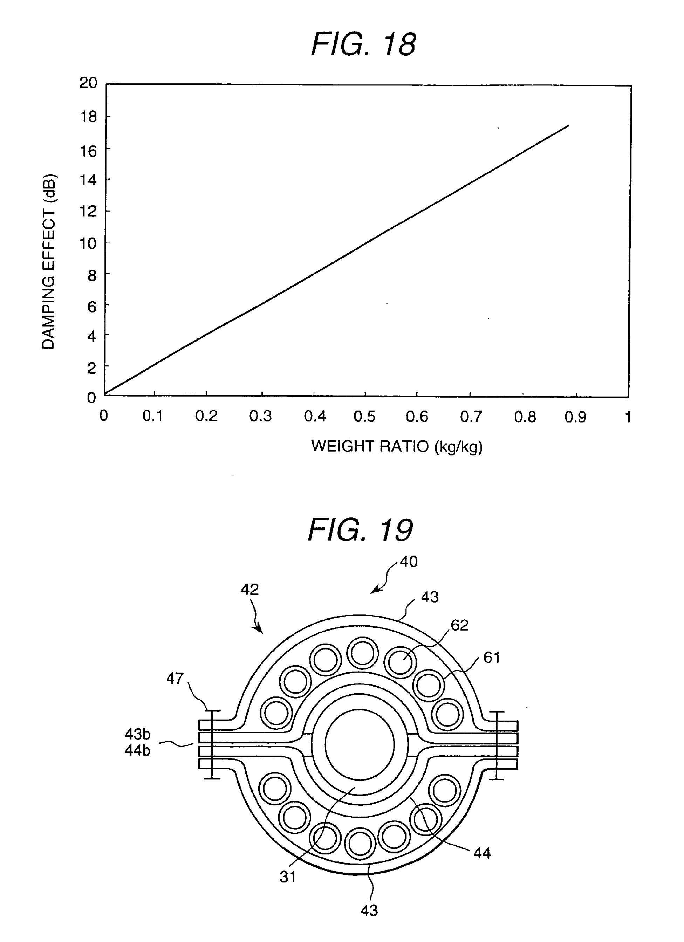

There have been described three types which are the type in which the damping apparatus is installed on the outside of the link, the type in which the particles are installed in the interior of the link, and the type in which the particles are installed in the interior and at the outside of the link. In the above stated types, the damping effect relative to the weight ratio of the particles to the link is summarized and shown in Fig. 18. It can be understood that the damping effect has a linear relationship against the weight ratio. When the weight ratio of the particle shape member against the link is 50%, the damping effect of about 10 db can be obtained.

It is preferable to mix particles having plural shapes into the one vessel. By this, in accordance with the increase of the weight ratio and the increase of the friction force the damping effect can be improved. The shapes in this case may differ in the particle diameter and the profile. It is unnecessary to use the sphere shapes. For example, there may be used a gourd shape, a multi-angular shape, and a shape having a recessed portion and a raised portion on a surface.

When there is the recessed portion and the raised portion on the surface, the contact area between the particles each other increases, and the damping effect increases. The particles having the recessed portion and the raised portion on the surface, for example, can be obtained by stirring the lead-based sphere shape particles using a blending machine.

From the experimentation using this, the damping effect in a modified shape particle is larger than that of the sphere shape particles. It is considered that the repulsion during the collision of the particles is small. Further, when the damping effect is the weight ratio, it is considered that the particles 41 may be formed by powder. The particles can be received in the interior portion of the pins 36 and 56.

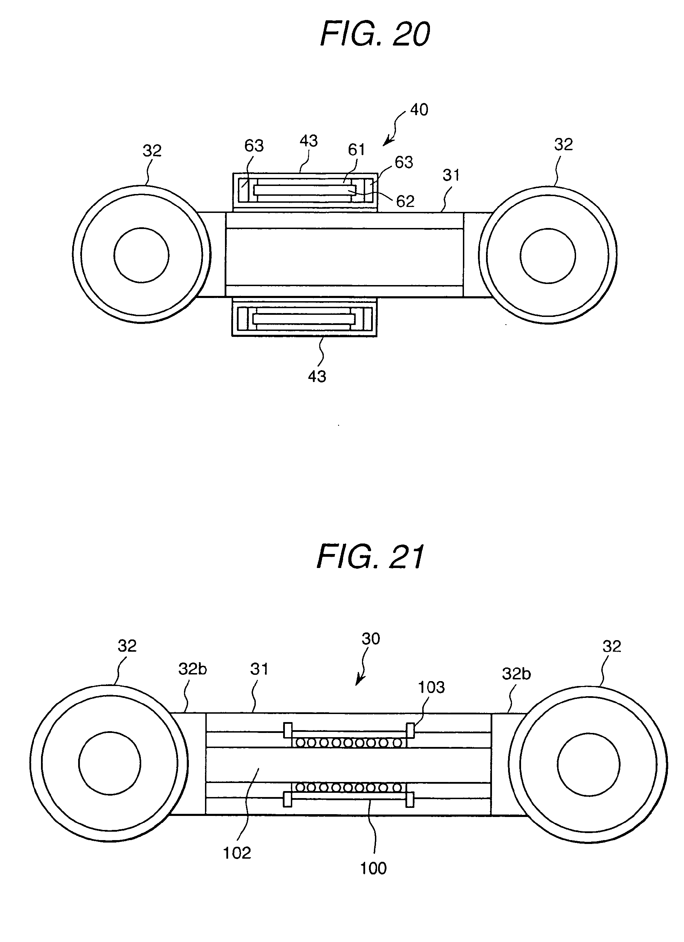

Embodiments shown in Figs. 19 and 20 will be explained. Between the inner side plate 44 and the outer side plate 43, there is a movable guide 61 and rods or columns 62 which can slide along in bores of the guide 61. The guide 61 has a circular shape and has plural bores in the axial direction. The plural holes are spaced around the circular shape of the guide 61. A seat 63 is fixed to an inner side of each end portion in the axial direction of the outer side plate 43. The length of the guide 61 is similar to that of the columns 62 and is a little less than the length between the seats 63. The guide 61 and the column 62 collide with the seat 63 when they move. The damping effect is derived from the friction resistance between the vessel 42 and the guide 61 and the columns 62.

The column or columns 62 can be provided without the guide 61. The column 62 can be divided in the axial direction. Further, the guide 61 and the column 62 can arrange in the interior of the link 30. The length of the guide 61 can be shortened.

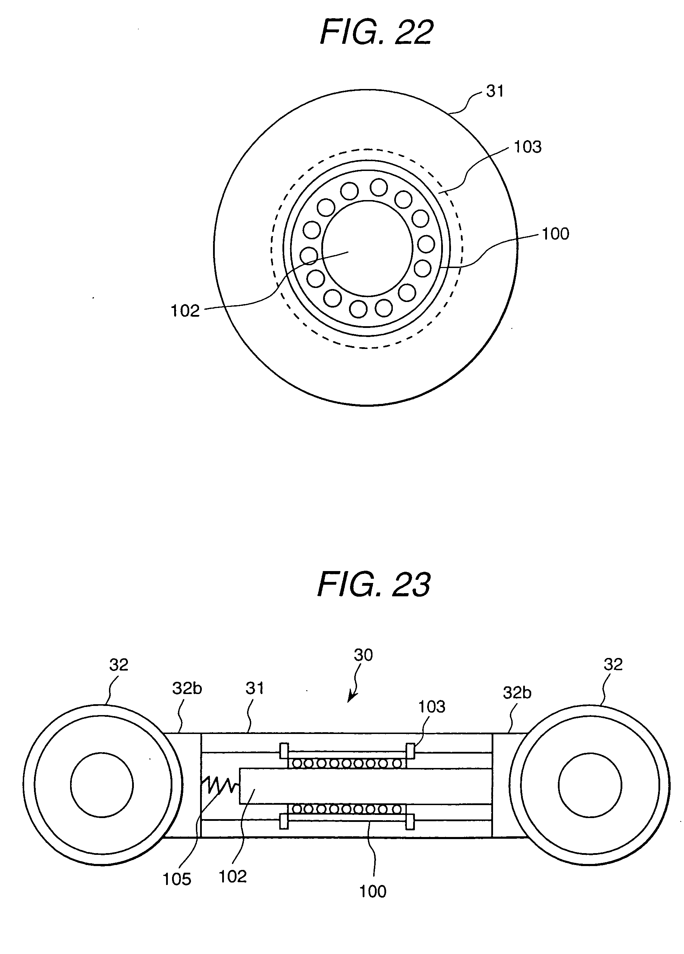

Embodiments shown in Fig. 21 and Fig. 22 will be explained. In the interior of the cylindrical portion 31 of the link 30, a linear bush 100 and a rod or column 102 are arranged. The column 102 is supported through plural bearings in the interior portion of the linear bush 100 and can move smoothly in the axial direction. The linear bush 100 is fixed to a central portion of the longitudinal direction of the cylindrical portion 31 through snap rings 103. The column 102 is longer than the linear bush 100. Both ends of the column 32 approach to an end face of the coupling 32b. The column 102 collides with the coupling 32b. The column 102 is made of iron and its diameter is in the range 20 to 50 mm. Before the coupling 32b is welded to the cylindrical portion 31, the linear bush 100, etc. are arranged. The couplings 32b are welded to the cylindrical portion 31 after the linear bush 100 and the column 102 are assembled.

With this stated construction, the damping effect can be obtained with a minute displacement (the comparatively high frequency of more than 100 Hz can be absorbed). Further, ane impact vibration component in the low frequency range from 0.1 to 50 Hz which generates in the forward and backward direction during running can be absorbed.

Further, plural bolts which penetrate into the cylinder radially from outside the cylindrical portion 31 may be provided, to fix the linear bush 100 in the interior. The linear bush 100 may be longer and the column 102 may be divided in the axial direction. In the column 102 particles can be inserted, as described above.

An embodiment shown in Fig. 23 will be explained. At one end of the column 102 a coil spring member 105 is installed. The coil spring member 105 can strike against the coupling 32b. The other end of the column 102 contacts an end face of the other coupling 32b. With this construction, the contact condition between the column 102 and the coupling 32b can be maintained always and the damping effect can be maintained against a minute vibration component. Further, since a specific vibration number which is determined by a spring constant of the spring 105 and a mass of the column 102 can be established suitably, a dynamic absorbing action can be expected.

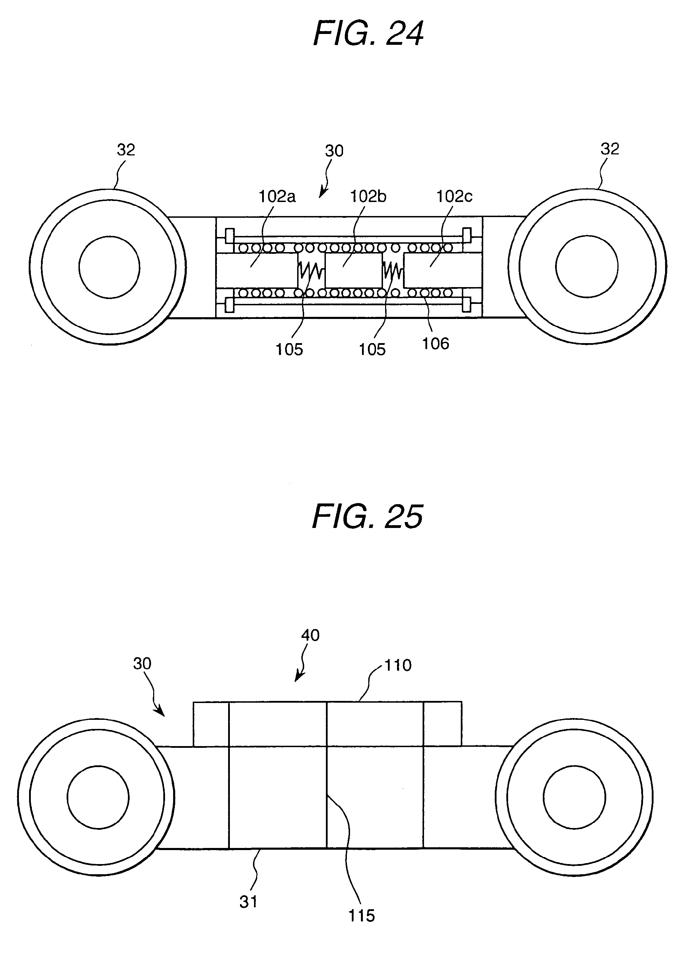

An embodiment shown in Fig. 24 will be explained. The column 102 is divided into three parts in the axial direction and at both ends of the central column part 102b a coil spring member 105 is provided. The coil spring members 105 can strike the adjacent columns 102a and 102c. The columns 102a and 102c contact the end faces of the couplings 32b and 32b.

An embodiment shown in Fig. 25 will be explained. In Fig. 25, the particles 41 are inserted into the interior portion of a pipe 110 (or alternatively the column 102 or the linear bush 100 is inserted). Both ends of the pipe 110 are closed. This pipe 110 is fixed to the outer face of the link 30 using plural bands 115. A plurality of the pipes 110 can be installed around the circumference of the cylindrical portion 31.

In the above embodiments a single link traction link system has been explained, but the invention can be applied to another traction link system, for example Z link system. Further, the vibration-absorbing device of this invention may be installed on the outside of the yaw damper 19 or on the outside of the right and left dampers, to give a similar effect. Further, by installation of the device of the invention to the shaft damper which connects the car body and the bogie in the up and down direction at the outside can be obtained the similar effect. Further, the invention can be applied to the bolster anchor of a bogie having a bolster.

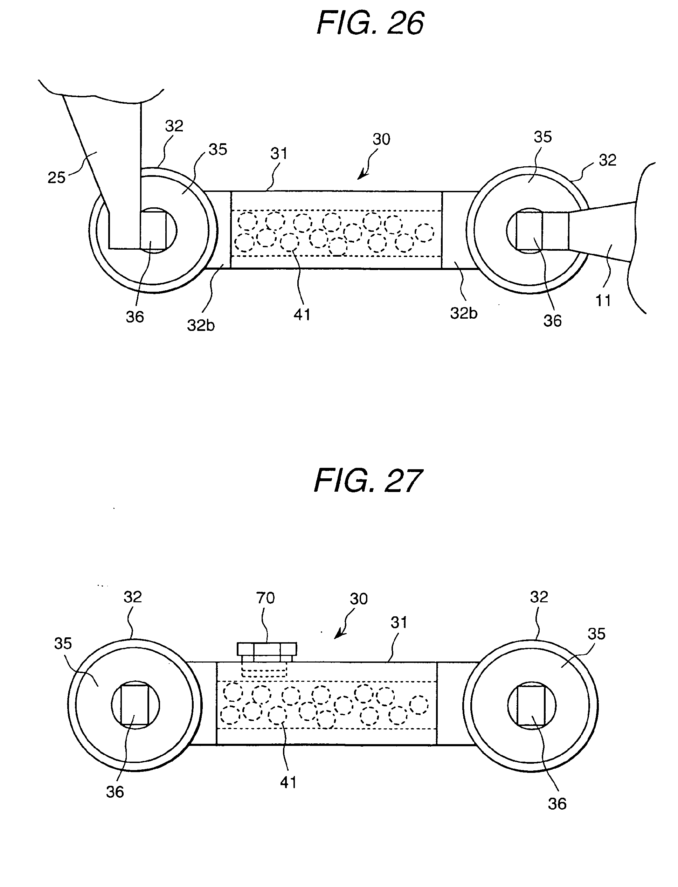

An embodiment shown in Fig. 26 will be explained. The link 30 has a hollow cylindrical shape and in the interior between the end portions 32b of the shaft coupling the particles 41 are enclosed. The particles 41 may be an iron-based material. For example, they may be iron (SS 400) and have a particle diameter in the range 1 to 10 mm. The fill density of the particles 41 is 50%. At both ends of the cylindrical portion 31, the couplings 32b are welded, for example after the particles 41 are inserted in the cylindrical portion 31.

To lubricate and prevent corrosion of the particles 41 in the link 30, a lubricating material such as oil etc. can be included.

Since the diameter of the particles 41 may be changed in response to the frequency of an insulation material (for a high frequency the particle diameter is made small), the reduction effect for small vibration can be obtained. Further, the particles having different particle diameters and the different specific gravity can be mixed in the interior of the link.

Further, by including the particles in devices such as those of Figs. 23 and 24, the specific vibration of the link 30 which is determined by the spring member and the mass can be adjusted to a suitable value.

If the particles are enclosed in the interior of the traction link, the problem of corrosion largely disappears.

When the material having the similar characteristic as in the prior art is used for the rubber bush 35, the running stability according to the prior art can be secured and the restraint of the vibration in which the rotation component of 80-240 Hz which is caused by the unbalance of the bogie drive system solid-propagates, and the reduction of noise in the car can be improved.

The cylindrical portion 31 may be divided into two in the longitudinal direction and the two cylindrical portions may be joined by flanges which are provided at their ends. With this construction, after the welding of the flange, strain removal of the link 30 can be carried out by the annealing. After that, the particles are inserted and the flanges are joined, e.g. by bolts.

An embodiment shown in Fig. 27 will be explained. At a side face of the cylindrical portion 31 of the link 30 an insertion hole having a screw cover 70 for addition or removal of the particles is provided. With this arrangement, the particles can be inserted easily after the link 30 has installed to the car body or the bogie. If there is scattering of the vibration characteristic as between cars, it is possible to provide optimization of the particles 41 for each car, and to carry out small adjustments. When the exchange of the particles occurs, it can be carried out easily.

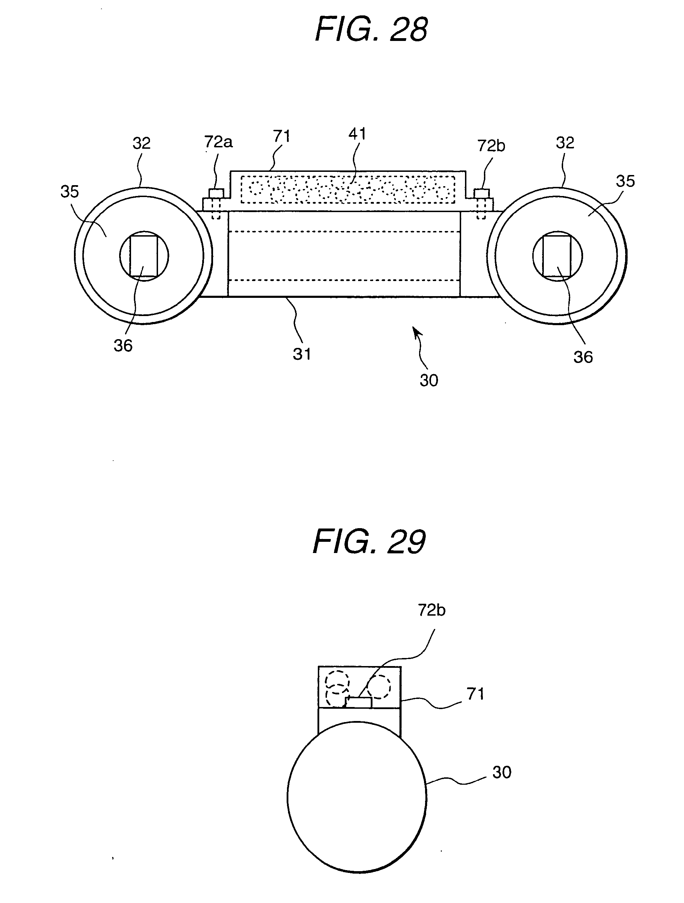

Embodiments shown in Figs. 28 and 29 will be explained. A damping apparatus 71 in which the particles 41 are enclosed is connected to the outer face of the cylindrical portion 31 of the link 30 by bolts 72a and 72b. This damping apparatus 71 can be removed easily and it is possible easily to exchange the apparatus. Further, it is possible to achieve easily the optimum arrangement of the damping apparatus 71.

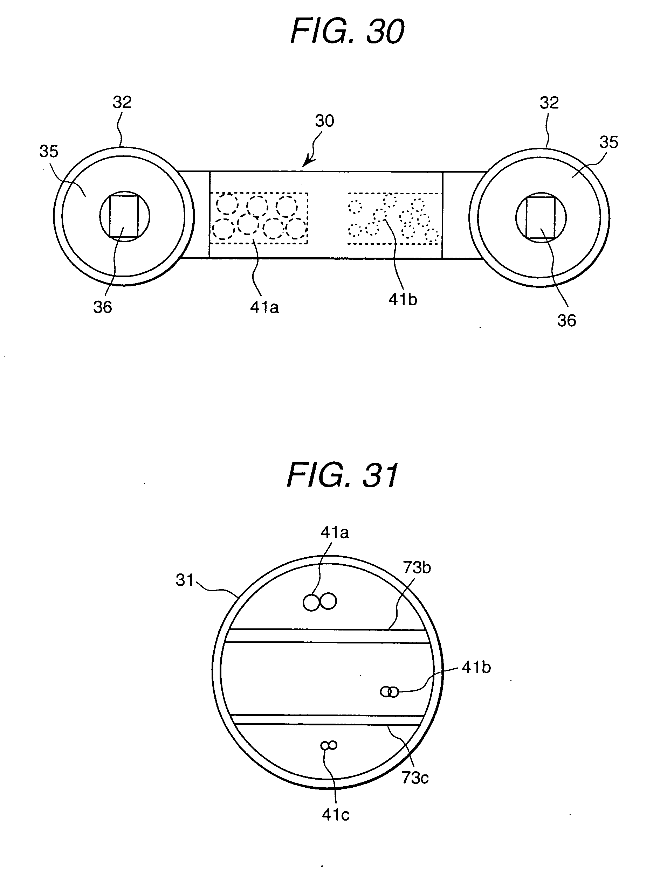

An embodiment shown in Fig. 30 will be explained. The interior of the cylindrical portion 31 of the link 30 is divided at the right and the left. In the cylindrical portion at one end particles 41a having a large diameter 41a are enclosed and at the other end side particles 41b having a small diameter 41b are enclosed. It is possible to use the particles 41a corresponding to one times the component of the unbalance of the rotation frequency of the drive system and particles 41b corresponding to two times this component.

An embodiment shown in Fig. 31 will be explained. The interior of the cylindrical portion 31 of the link 30 which encloses the particles is divided into three layers by plates 73a and 73b, and in these interior portions particles 41a, 41b, and 41c having the respective different characteristics are enclosed. For example, the particles 41a, 41b, and 41c have particle diameters which correspond respectively to the one times component, the two times component, and three times component of f1. Accordingly, precise vibration restraint can be carried out.

The concepts shown in Fig. 30 or Fig. 31 may be applied to the embodiments shown in Figs. 28 and 29, so that plural devices 71, having respective different characteristics are installed at the outer periphery of the cylindrical portion 31 of the link 30.

In Fig. 26, the particles can be inserted to the interior of the pins 36. With this construction, the vibration can be restrained by these portions also.

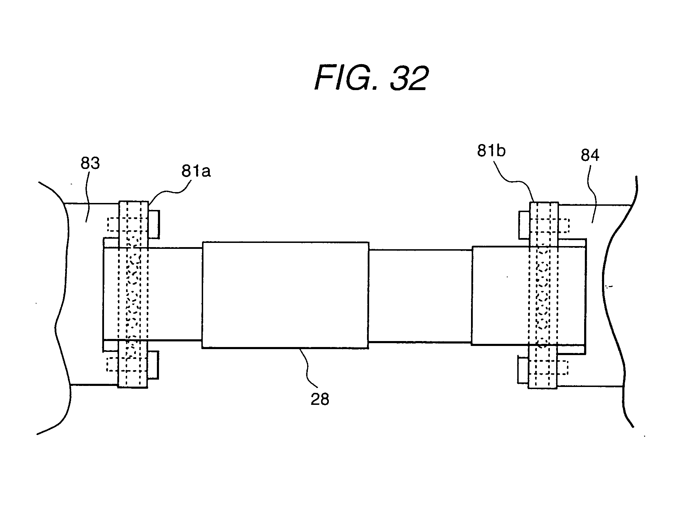

In Fig. 32 the damping apparatus with the particles is applied to the yaw damper 28. By pins 81a and 81b which penetrate the rubber bush of the yaw damper 28, the damping apparatus is bolted to installation portions 83 and 84 of the bogie and the car body. In the interior of the pins 81a and 81b the particles 41 are enclosed. The particle diameters in the pins 81a and 81b may be different.

Between the bogie and the car body, there may be a right and left damper. To this damper, as to the yaw damper, in the pin of the connection between the damper and the bogie or the car body the particles 41 may be applied.

According to the present invention, with a simple construction in which a mobile material is provided to a connection member for connecting the bogie and the car body, the transmission of the vibration from the drive system can be restrained, and noise in the car can be reduced.

The following numbered paragraphs (paras.) contain statements of broad combinations of the inventive technical features herein disclosed:-
1. A railway vehicle having a car body, wherein a connection member between the car body and another car body or a bogie frame has a container containing material able to move relative to said connection member so as to absorb vibration, thereby to hinder vibration transmission to the car body.
2. A railway vehicle according to para. 1, wherein said material is able to move in said container backwards and forwards in the travel direction of the railway vehicle.
3. A railway vehicle according to para. 1 or 2, wherein said material comprises particles in contact with each other in said container.
4. A railway vehicle according to para. 3, wherein said particles are of a material having a specific gravity at least as high as that of iron.
5. A railway vehicle according to para. 3 or 4, wherein said particles have a plurality of different shapes.
6. A railway vehicle according to any one of paras. 1 to 5, wherein said connection member is a traction link which connects a second member projecting below from said car body and a bogie frame of the railway vehicle.
7. A railway vehicle according to para. 6, wherein container is constituted by a portion between the two ends of said traction link.
8. A railway vehicle according to para. 7, wherein said traction link has an ellipse cross-sectional shape in which a longitudinal direction is longer than a lateral direction, the height dimension of said ellipse or said traction link adjacent said second connection member is smaller than the height dimension thereof adjacent said bogie frame.
9. A railway vehicle according to para. 7 or 8, wherein at both ends of said hollow portion, couplings for connecting said bogie frame and said second member are provided, there being at at least one of said couplings a hole opening into hollow portions for insertion of said material, and said hole being closed by a rubber bush which is arranged in the coupling.
10. A railway vehicle according to any one of paras. 1 to 6, wherein said container is installed outside said connection member.
11. A railway vehicle according to any one of paras. 1 to 5, wherein said connection member is a damper.
12. A railway vehicle according to any one of paras. 1 to 5, 10 and 11, wherein an elastomeric seat is provided between said container and said connection member.
13. A railway vehicle according to para. 12, wherein said elastomeric seat comprises plural layers of
14. A railway vehicle bogie for use in a railway vehicle according to any one of paras. 1 to 13, wherein the bogie comprises said connection member for connection to a car body, and said connection member has said container containing said movable substance.
15. A railway vehicle connection member for use in a railway vehicle according to any one of paras. 1 to 13, for connecting between one railway car body and a bogie car, the connection member has said container containing said movable material.
16. A connection member according to para. 15, which is a traction link, a damper, or a bolster anchor.

## Claims

1. A railway vehicle connection member (50), for connecting between a railway car body and a bogie frame, having a hollow longitudinal member (51) connecting couplings (52) at the respective ends of the member (50), the hollow member (51) containing in its interior a mass of particles in contact with each other and able to move relative to each other so as to absorb vibration by collision, and the hollow member (51) having a larger height dimension at its end near the coupling (52) to be attached to the bogie frame than at its end near the coupling (52) to be attached to the car body.

2. A connection member according to claim 1, wherein said particles have a specific gravity at least as high as that of iron.

3. A connection member according to claim 2, wherein said particles are of lead-based material.

4. A connection member according to any one of claims 1 to 3, wherein said particles (41) are arranged to move in said container (40) in use backwards and forwards in the travel direction of the railway vehicle.

5. A connection member according to any one of claims 1 to 4, wherein said particles (41) have a plurality of different shapes.

6. A connection member according to any one of claims 1 to 5, wherein said hollow member (5) has portions of constant cross-section in the longitudinal direction separated by a portion of changing cross-section.

7. A railway vehicle having a car body (20), a bogie (11) and a connection member (30) according to any one of claims 1 to 6, interconnecting said car body (20) and said bogie (11).
